(19) Europäisches Patentamt
European Patent Office
Office européen des brevets

(11) EP 4 375 831 A1

(12) EUROPEAN PATENT APPLICATION

(43) Date of publication:
**29.05.2024 Bulletin 2024/22**

(21) Application number: **23185813.5**

(22) Date of filing: **17.07.2023**

(51) International Patent Classification (IPC):
***G06F 7/544*** *(2006.01)* ***G06N 3/126*** *(2023.01)*
***G06N 5/01*** *(2023.01)*

(52) Cooperative Patent Classification (CPC):
**G06F 7/544; G06N 3/126; G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022 JP 2022189402**

(71) Applicant: **FUJITSU LIMITED**
**Kawasaki-shi, Kanagawa 211-8588 (JP)**

(72) Inventor: **WATANABE, Yasuhiro**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

# (54) DATA PROCESSING APPARATUS, PROGRAM, AND DATA PROCESSING METHOD

(57) A data processing apparatus configured to: acquire a change amount of a value of an evaluation function of a combinatorial optimization problem for each of a plurality of state variables included in the evaluation function, update, every time one of the plurality of state variables is changed, a value of a local field of the one of the plurality of state variables, acquire a cumulative value of the change amount, determine whether to accept a change in values of a first number, which is equal to or more than 2, of the plurality of state variables, based on the cumulative value, and when the change in values of the first number is not accepted, return the updated value of the local field to a value of a local field at the certain time point.

FIG. 1

10
11
WEIGHT COEFFICIENT MEMORY
14
UPDATE CIRCUIT
17
CONTROL CIRCUIT
12
MEMORY
STATE
STARTING POINT STATE
LOCAL FIELD
STARTING POINT LOCAL FIELD
13
TRANSITION CANDIDATE DETERMINATION CIRCUIT
15
CUMULATIVE VALUE CALCULATION CIRCUIT
16
DETERMINATION CIRCUIT
19
COMPARISON CIRCUIT
18
ENERGY UPDATE HOLDING CIRCUIT
20
LOWEST ENERGY UPDATE HOLDING CIRCUIT

EP 4 375 831 A1

**Description**

FIELD

The embodiments discussed herein are related to a data processing apparatus, a program, and a data processing method.

BACKGROUND

As a method of searching for a solution to a combinatorial optimization problem, there is a method of converting the combinatorial optimization problem into an Ising model representing a behavior of a spin of a magnetic substance. A search for a state in the Ising model in which a value of an Ising-type evaluation function, for example, a value equivalent to energy of the Ising model is minimized is performed by using a Markov chain Monte Carlo method. A state in which the value of the evaluation function is the minimum value among local minimum values is the optimum solution. A state variable included in the Ising-type evaluation function is a binary variable having a value of 0 or 1. The state variable may be denoted by a bit. By changing a sign of the evaluation function, it is possible to also search for a state in which the value of the evaluation function is a local maximum.

Hereinafter, the Markov chain Monte Carlo method is abbreviated as an MCMC method. A process by the MCMC method may be referred to as an MCMC process. For example, in the MCMC process, a state transition is accepted with an acceptance probability of the state transition defined by a Metropolis method or a Gibbs method. As one type of the MCMC method, there is a simulated annealing method or a replica exchange method.

In the related art, there is a process (hereinafter, referred to as a single-bit transition process) in which the number of bits with which a change (hereinafter, referred to as a transition) of a state variable is permitted per one trial of the MCMC process is set to 1. Meanwhile, in a case where a solution fits into a local solution in the single-bit transition process, it may be difficult to escape from the local solution, and a search speed may be decreased.

Thus, there is proposed a process in which, based on a calculation result of a change amount of a value of an evaluation function in a case where a transition of a plurality of bits occurs, it is determined whether or not the transition of the plurality of bits is permitted, and in a case where the transition is permitted, the transition of the plurality of bits is caused to occur. Hereinafter, this process is referred to as a multi-bit transition process. According to the multi-bit transition process, an escape of the solution from the local solution is promoted, and a search range may be widened.

Japanese Laid-open Patent Publication No. 2020-021209, Japanese Laid-open Patent Publication No. 2020-064536, Japanese Laid-open Patent Publication No. 2021-157361, and Japanese Laid-open Patent Publication No. 2021-165965 are disclosed as related art.

[TECHNICAL PROBLEM]

In the multi-bit transition process in the related art, implementation is not easy since a configuration for calculating the change amount of the value of the evaluation function in a case where the transition of the plurality of bits occurs, a configuration for transferring data, or the like is complicated.

In one aspect, an object of the present disclosure is to provide a data processing apparatus, a program, and a data processing method that enable relatively easy implement of a multi-bit transition process.

[ADVANGEOUS EFFECTS OF INVENTION]

According to an aspect of the present disclosure, implement of a multi-bit transition process may be relatively easily realized.

SUMMARY

[SOLUTION TO PROBLEM]

According to an aspect of the embodiments, a data processing apparatus includes a memory that stores values of a plurality of state variables included in an evaluation function of a combinatorial optimization problem, values of local fields of each of the plurality of state variables, values of the plurality of state variables at a predetermined time point, and values of the local fields at the predetermined time point; a transition candidate determination circuit that calculates, based on the value of the local field, a change amount of a value of the evaluation function when the value of each of the plurality of state variables is changed, and determines, one by one, a candidate of which a value is to be changed among the plurality of state variables, from the predetermined time point; an update circuit that updates, every time the candidate is determined, the value of the candidate and the value of the local field stored in the memory; a cumulative value calculation circuit that calculates a cumulative value of the change amount when the value of the candidate is changed; a determination circuit that determines whether to accept a change in values of a first number, which is equal to or more than 2, of the candidates, based on the cumulative value; and a control circuit that, in a case where the determination circuit determines that the change in values of the first number of the candidates is not accepted, returns the updated values of the plurality of state variables and the updated values of the local fields to the values of the plurality of state variables and the values of the local fields at the predetermined time point.

BRIEF DESCRIPTION OF DRAWINGS

FIG. 1 is a diagram illustrating an example of a data processing apparatus according to a first embodiment;
FIG. 2 is a diagram illustrating a circuit example of a memory, an update circuit, and a transition candidate determination circuit;
FIG. 3 is a flowchart illustrating an example flow of a data processing method according to the first embodiment;
FIG. 4 is a flowchart illustrating an example flow of a single-bit transition process;
FIG. 5 is a flowchart illustrating an example flow of a multi-bit transition process;
FIG. 6 is a flowchart illustrating a flow of another example of the multi-bit transition process;
FIG. 7 is a diagram illustrating an example of a pipeline process;
FIG. 8 is a diagram illustrating an example of a data processing apparatus according to a second embodiment (part 1);
FIG. 9 is a diagram illustrating the example of the data processing apparatus according to the second embodiment (part 2);
FIG. 10 is a flowchart illustrating an example flow of a multi-bit transition process;
FIG. 11 is a flowchart illustrating a flow of another example of the multi-bit transition process;
FIG. 12 is a diagram illustrating another example of the pipeline process;
FIG. 13 is a diagram illustrating a hardware example of the data processing apparatus; and
FIG. 14 is a diagram illustrating a hardware example of a computer.

DESCRIPTION OF EMBODIMENTS

Hereinafter, embodiments of the present disclosure will be described with reference to the accompanying drawings.

(First Embodiment)

A data processing apparatus according to a first embodiment searches for a solution to a combinatorial optimization problem by using an MCMC method such as a simulated annealing method or a replica exchange method, and outputs the searched solution.

For example, the combinatorial optimization problem is converted into an Ising-type evaluation function. The evaluation function of the combinatorial optimization problem may be referred to as an objective function, an energy function, or the like. The evaluation function includes a plurality of state variables and a plurality of weight coefficients. In the Ising-type evaluation function, the state variable is a binary variable having a value of 0 or 1. The state variable may be denoted by a bit. A solution to the combinatorial optimization problem is represented by values of the plurality of state variables. A solution that minimizes a value of the evaluation function corresponds to the optimum solution to the combinatorial optimization problem. Hereinafter, the value of the evaluation function is referred to as energy.

The Ising-type evaluation function is represented by Equation (1).

$$E(x) = -\sum_{<i,j>} W_{ij} x_i x_j - \sum_i b_i x_i \qquad (1)$$

A state vector x has a plurality of state variables as elements, and represents a state of an Ising model. Equation (1) is an evaluation function formulated in a quadratic unconstrained binary optimization (QUBO) format. In a case of a problem of maximizing energy, a sign of the evaluation function may be reversed.

A first term on the right side of Equation (1) is obtained by integrating a product of values of two state variables and a weight coefficient without omission and duplication for all combinations of two state variables that are selectable from all state variables. Subscripts i and j are indices of state variables. $x_i$ is an i-th state variable. $x_j$ is a j-th state variable. Hereinafter, it is assumed that the number of state variables is N. $W_{ij}$ is a weight between the i-th state variable and the j-th state variable or a weight coefficient indicating a strength of coupling. $W_{ij} = W_{ji}$, and $W_{ii} = 0$. In a case where the number of state variables is N, the number of $W_{ij}$ is N × N.

A second term on the right side of Equation (1) is a sum of a product of a value of the state variable and a bias for each of all the state variables. $b_i$ indicates a bias for the i-th state variable.

When a value of the state variable $x_i$ is changed to $1-x_i$, a change amount of the state variable $x_i$ may be represented as $\Delta x_i = (1 - x_i) - x_i = 1 - 2x_i$. Therefore, for the evaluation function E (x), a change amount ($\Delta E_i$) of energy due to a change in the state variable $x_i$ is represented by the following Equation (2).

$$\Delta E_i = E(x)|_{x_i \to 1-x_i} - E(x) = -\Delta x_i \left( \sum_j W_{ij} x_j + b_i \right) = -\Delta x_i h_i \quad (2)$$

$h_i$ is referred to as a local field (LF). A change amount of $h_i$ when the value of $x_j$ is changed is represented by $\Delta h_i^{(j)} = W_{ij}\Delta x_j$.

For searching for a solution, a Metropolis method or a Gibbs method is used to determine whether or not to accept a state transition in which the change amount of energy is $\Delta E_i$, for example, a change of the value of the state variable $x_i$. For example, in a neighbor search for searching for a transition from a certain state to another state in which energy is lower than energy of the state, the transition to not only a state in which energy is lowered but also a state in which energy is increased is stochastically accepted. For example, an acceptance probability $A_i$ of accepting the change of the value of the state variable that causes $\Delta E_i$ is represented by Equation (3).

$$A_i = \begin{cases} \min[1, \exp(-\beta \Delta E_i] & \text{Metropolis method} \\ 1/[1 + \exp(\beta \Delta E_i)] & \text{Gibbs method} \end{cases} \quad (3)$$

β is a reciprocal number (β = 1/T) of T (T > 0) which is a parameter representing a temperature, and is referred to as an inverse temperature. Hereinafter, β or T may also be referred to as a temperature value. An operator min indicates a minimum value of arguments. An upper right side of Equation (3) corresponds to the Metropolis method. A lower right side of Equation (3) corresponds to the Gibbs method.

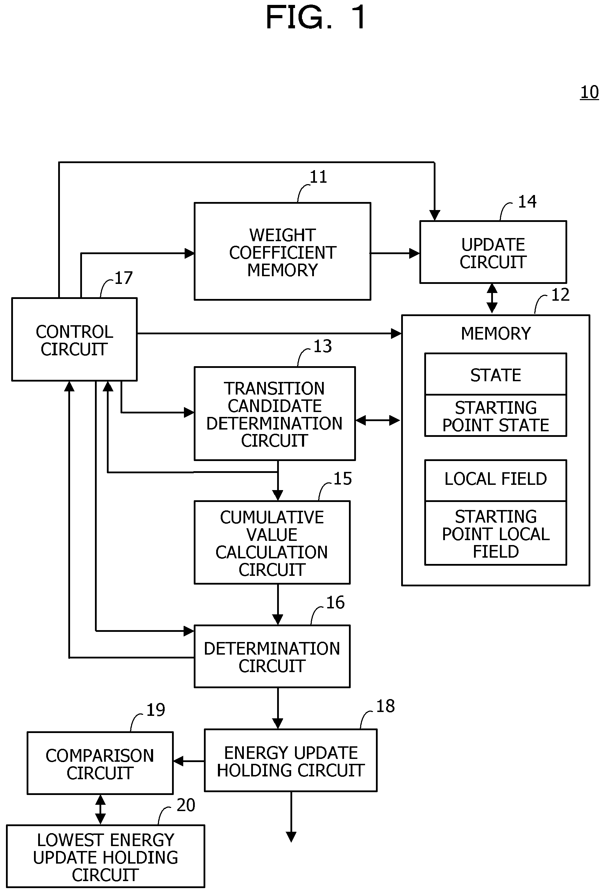

FIG. 1 is a diagram illustrating an example of a data processing apparatus according to the first embodiment.

A data processing apparatus 10 includes a weight coefficient memory 11, a memory 12, a transition candidate determination circuit 13, an update circuit 14, a cumulative value calculation circuit 15, a determination circuit 16, a control circuit 17, an energy update holding circuit 18, a comparison circuit 19, and a lowest energy update holding circuit 20.

The weight coefficient memory 11 stores $W_{ij}$ of N × N illustrated in Equation (1). For example, the weight coefficient memory 11 may be realized by a volatile storage device that is an electronic circuit such as a dynamic random-access memory (DRAM), a non-volatile storage device that is an electronic circuit such as a flash memory, or the like. The weight coefficient memory 11 may be a storage device such as a hard disk drive (HDD).

The memory 12 stores values (hereinafter, referred to as states, in some cases) of a plurality of state variables ($x_1$ to $x_N$) included in an evaluation function and values of local fields ($h_1$ to $h_N$) of respective $x_1$ to $x_N$. The memory 12 stores the values of $x_1$ to $x_N$ at a predetermined time point in a solution search and the values of $h_1$ to $h_N$ at the predetermined time point. The predetermined time point is, for example, a time point at which a multi-bit transition process is started (hereinafter, referred to as a starting point). In FIG. 1, the values of $x_1$ to $x_N$ at the starting point are denoted by starting point states, and the values of $h_1$ to $h_N$ at the starting point are denoted by starting point local fields.

A memory having a storage capacity smaller than a storage capacity of the weight coefficient memory 11 may be used as the memory 12. For example, the memory 12 may be realized by a volatile storage device or the like that is an electronic circuit such as a static random-access memory (SRAM) or a register.

Based on $h_1$ to $h_N$, the transition candidate determination circuit 13 calculates an energy change amount ($\Delta E_1$ to $\Delta E_N$) when each value of $x_1$ to $x_N$ is changed. For example, the transition candidate determination circuit 13 may calculate $\Delta E_1$ to $\Delta E_N$ in parallel. The transition candidate determination circuit 13 determines, one by one, candidates (hereinafter, referred to as transition candidates) of which values are to be changed, among the plurality of state variables at the starting point.

In the following example, it is assumed that the data processing apparatus 10 performs a multi-bit transition process with n-bit. n may be referred to as a transition bit depth. The transition candidate determination circuit 13 determines, one by one, the n transition candidates described above.

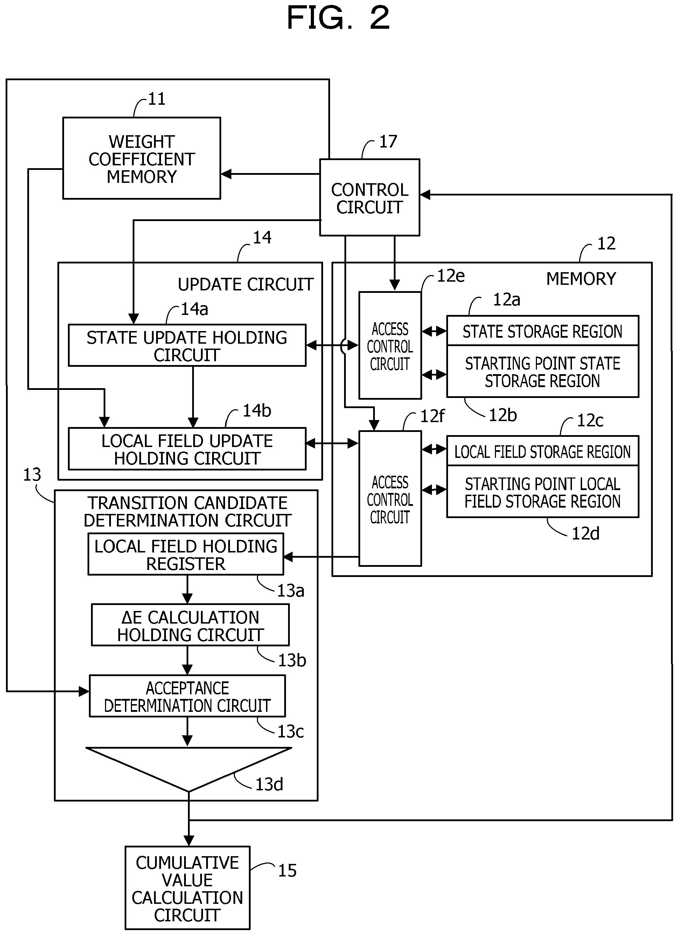

The transition candidate determination circuit 13 outputs an index of a state variable determined as a transition candidate and a change amount ($\Delta E$) of energy when a value of the transition candidate is changed. An example of a method of determining the transition candidate and an example of the transition candidate determination circuit 13 will be described below (see FIG. 2).

Every time a transition candidate is determined, the update circuit 14 updates the values of $x_1$ to $x_N$ and the values of $h_1$ to $h_N$ stored in the memory 12 to values in a case where the value of the transition candidate is changed. In the following example, it is assumed that the update circuit 14 performs the update described above until n-1 transition candidates are determined. In a case where $x_j$ is a transition candidate, $h_i$ is updated to a value of $h_i = h_i + W_{ij}\Delta x_j$. At this time, a state (starting point state) and a local field (starting point local field) at the starting point are not updated. The update here is a temporary update, and the updated state or value of the local field may be returned to the starting point state or the starting point local field by a process to be described below. In the example illustrated in FIG. 1, the update circuit 14 performs the update process described above under control of the control circuit 17.

The cumulative value calculation circuit 15 calculates a cumulative value of a change amount of energy when a value of a transition candidate is changed. For example, the cumulative value calculation circuit 15 may be realized by using an adder, a register, or the like.

By the MCMC method, the determination circuit 16 determines whether or not to accept a change of the values of the n transition candidates, based on the cumulative value of the change amount of energy. For example, the determination circuit 16 uses the cumulative value as $\Delta E_i$ in Equation (3) described above, and performs determination to accept the change of the values of the n transition candidates, with the acceptance probability $A_i$ in Equation (3). For example, the determination circuit 16 that performs such determination may be realized by using a comparator or the like that outputs a value based on a comparison result between a uniform random number having a value from 0 to 1 and $A_i$.

In a case where the determination circuit 16 determines that the change of the values of the n transition candidates is accepted, the control circuit 17 causes the update circuit 14 to update the values of $x_1$ to $x_N$ and the values of $h_1$ to $h_N$ stored in the memory 12 to values in the case where the value of the n-th transition candidate is changed. In a case where the determination circuit 16 determines that the change of the values of the n transition candidates is not accepted, the control circuit 17 returns the updated values of $x_1$ to $x_N$ and the updated values of $h_1$ to $h_N$ to the values of the stored starting point state and starting point local field.

The control circuit 17 has a function of controlling an operation of each element illustrated in FIG. 1.

For example, the control circuit 17 performs the control for causing the update circuit 14 to read, from the weight coefficient memory 11, a weight coefficient between a state variable corresponding to an index output by the transition candidate determination circuit 13 and another state variable. The control circuit 17 controls the temperature value (T or $\beta$) used in the determination process by the determination circuit 16. For example, in a case where a simulated annealing method is used as the MCMC method, the control circuit 17 gradually decreases a value of T in accordance with a predetermined schedule. For example, in a case where a replica exchange method is used as the MCMC method, the control circuit 17 performs control such that the process of each circuit described above is independently performed for a plurality of replicas of an Ising model, respectively. The control circuit 17 sets different temperature values for the plurality of respective replicas, and exchanges temperature values between the replicas at a predetermined exchange probability in a predetermined cycle.

Based on the determination result output by the determination circuit 16, the control circuit 17 may switch between causing the transition candidate determination circuit 13 to execute a single-bit transition process and causing the transition candidate determination circuit 13 to execute a multi-bit transition process. For example, at a time of a solution search in the single-bit transition process, in a case where a determination result indicating that the change of the value is not accepted is continued for a predetermined period, the control circuit 17 switches from the single-bit transition process to the multi-bit transition process.

In the single-bit transition process, the transition candidate determination circuit 13 performs a process of determining whether or not to permit a value change for each of $x_1$ to $x_N$ based on $\Delta E_1$ to $\Delta E_N$. In the same manner as the determination circuit 16, the determination at this time is performed in accordance with the MCMC method. In the multi-bit transition process, the transition candidate determination circuit 13 performs a process of determining transition candidates one by one from the starting point.

At a time of a solution search in the multi-bit transition process, in a case where a determination result indicating that the change in the value is not accepted is continued for a predetermined period, the control circuit 17 may increase a value of n in the multi-bit transition process. The control circuit 17 switches from the single-bit transition process to the multi-bit transition process. At the time of the solution search in the multi-bit transition process, in a case where a determination result indicating that the change of the value is accepted is obtained, or in a case where such a determination result is continued for a predetermined period, the control circuit 17 may switch from the multi-bit transition process to the single-bit transition process.

In a case where the determination circuit 16 determines that the change of the values of the n transition candidates is not accepted, the control circuit 17 may control the transition candidate determination circuit 13 such that the same n transition candidates are not selected again.

For example, the energy update holding circuit 18 includes a holding circuit such as a register, and holds energy. In a case where the determination circuit 16 determines that the change of the values of the n transition candidates is accepted, the energy update holding circuit 18 acquires the cumulative value of $\Delta E$ calculated by the cumulative value calculation circuit 15, updates the energy based on the cumulative value, and outputs the energy.

The comparison circuit 19 compares the energy held in the energy update holding circuit 18 with the lowest energy held in the lowest energy update holding circuit 20.

For example, the lowest energy update holding circuit 20 includes a holding circuit such as a register, and holds the lowest energy obtained so far. In a case where the comparison circuit 19 outputs a comparison result indicating that the energy held in the energy update holding circuit 18 is lower than the lowest energy obtained so far, the lowest energy update holding circuit 20 updates the lowest energy with the energy. The lowest energy update holding circuit 20 holds values of $x_1$ to $x_N$ when the lowest energy is obtained. For example, the values of $x_1$ to $x_N$ held when a predetermined end condition is satisfied are output as a solution to a combinatorial optimization problem.

FIG. 2 is a diagram illustrating a circuit example of a memory, an update circuit, and a transition candidate determination circuit.

The memory 12 includes a state storage region 12a, a starting point state storage region 12b, a local field storage region 12c, a starting point local field storage region 12d, and access control circuits 12e and 12f.

Values of $x_1$ to $x_N$ are stored in the state storage region 12a, and the values of $x_1$ to $x_N$ at a starting point of a solution search are stored in the starting point state storage region 12b. Values of $h_1$ to $h_N$ are stored in the local field storage region 12c, and the values of $h_1$ to $h_N$ at the starting point are stored in the starting point local field storage region 12d.

Based on control of the control circuit 17, the access control circuit 12e controls reading and writing of states from and to the state storage region 12a and the starting point state storage region 12b, and the state update holding circuit 14a of the update circuit 14. Based on the control by the control circuit 17, for example, the following operation is performed.

In a case where the values of $x_1$ to $x_N$ are updated, the access control circuit 12e overwrites the values of $x_1$ to $x_N$ stored in the state storage region 12a with the updated values of $x_1$ to $x_N$.

In a case where the determination circuit 16 determines to accept a change of the values of the n transition candidates, the access control circuit 12e overwrites the values of $x_1$ to $x_N$ at the starting point stored in the starting point state storage region 12b with the values of $x_1$ to $x_N$ stored in the state storage region 12a. The values of $x_1$ to $x_N$ stored in the state storage region 12a are obtained by updating n values among the values of $x_1$ to $x_N$ at the starting point.

In a case where the determination circuit 16 determines that the change of the values of the n transition candidates is not accepted, the access control circuit 12e overwrites the values of $x_1$ to $x_N$ stored in the state storage region 12a with the values of $x_1$ to $x_N$ at the starting point stored in the starting point state storage region 12b.

Based on the control of the control circuit 17, the access control circuit 12f controls reading and writing of local fields from and to the local field storage region 12c and the starting point local field storage region 12d, and the local field update holding circuit 14b and the local field holding register 13a. Based on the control by the control circuit 17, for example, the following operation is performed.

In a case where a process of the transition candidate determination circuit 13 is performed, the access control circuit 12f writes the values of $h_1$ to $h_N$ stored in the local field storage region 12c to the local field holding register 13a.

In a case where the values of $h_1$ to $h_N$ are updated, the access control circuit 12f overwrites the values of $h_1$ to $h_N$ stored in the local field storage region 12c with the updated values of $h_1$ to $h_N$.

In a case where the determination circuit 16 determines to accept the change of the values of the n transition candidates, the access control circuit 12f overwrites the values of $h_1$ to $h_N$ at the starting point stored in the starting point local field storage region 12d with the values of $h_1$ to $h_N$ stored in the local field storage region 12c.

In a case where the determination circuit 16 determines that the change in the values of the n transition candidates is not accepted, the access control circuit 12f overwrites the values of $h_1$ to $h_N$ stored in the local field storage region 12c with the values of $h_1$ to $h_N$ at the starting point stored in the starting point local field storage region 12d.

The transition candidate determination circuit 13 includes a local field holding register 13a, a $\Delta E$ calculation holding circuit 13b, an acceptance determination circuit 13c, and a selection circuit 13d.

The local field holding register 13a holds the values of $h_1$ to $h_N$.

By using the values of $h_1$ to $h_N$ held in the local field holding register 13a, the $\Delta E$ calculation holding circuit 13b calculates $\Delta E_1$ to $\Delta E_N$ in accordance with Equation (2) described above. Although not illustrated, $\Delta x_i$ in Equation (2) may be obtained from the values of $x_1$ to $x_N$ held in the state storage region 12a. The $\Delta E$ calculation holding circuit 13b includes, for example, a register, and holds the calculated $\Delta E_1$ to $\Delta E_N$.

The acceptance determination circuit 13c accepts a change in value of at least one state variable. For example, the acceptance determination circuit 13c outputs an index of a state variable that causes $\Delta E$ having the lowest energy when the value is changed, and the ΔE. For example, the acceptance determination circuit 13c may output indices of a plurality of state variables that cause ΔE smaller than a predetermined threshold value and ΔE of the plurality of state variables. Alternatively, the acceptance determination circuit 13c may accept a change of values of one or more state variables in accordance with a predetermined rule.

Meanwhile, while the acceptance determination circuit 13c determines the n transition candidates, for a state variable that becomes a transition candidate once, the acceptance determination circuit 13c does not accept a change in value of the state variable. This is to reduce a situation in which a state variable that becomes a transition candidate once becomes a transition candidate again and the value of the state variable returns to an original value.

Instead of ΔE, the acceptance determination circuit 13c may use n cumulative values of ΔE updated in a case where each of the values of $x_1$ to $x_N$ is changed. Such a cumulative value may be calculated by the cumulative value calculation circuit 15. Meanwhile, the cumulative value may not necessarily be passed to the transition candidate determination circuit 13 with original accuracy. For example, the cumulative value calculation circuit 15 may reduce the data amount of the cumulative value (for example, reduce from 64 bits to 4 bits) by a predetermined bit reduction method, and may pass the cumulative value after the data amount reduction to the transition candidate determination circuit 13. Even in a case where any one of $x_1$ to $x_N$ is selected as the n-th transition candidate, the transition candidates up to the (n-1)-th transition candidate are common, so that even when ΔE is used, a magnitude relationship between ΔE and the cumulative value of $x_1$ to $x_N$ is not changed by using the cumulative value of ΔE. Thus, the transition candidate determination circuit 13 performs the same process regardless of whether the acceptance determination is performed based on the cumulative value or based on ΔE.

In a case of a single-bit transition process, the acceptance determination circuit 13c accepts a change in value of each state variable with an acceptance probability represented by Equation (3).

In a case where the acceptance determination circuit 13c accepts a change of values of a plurality of state variables, the selection circuit 13d selects one of the plurality of state variables of which change in value is accepted, and outputs an index of the state variable and ΔE associated with the change in the value of the state variable. For example, the selection circuit 13d may randomly select one state variable, or may select one state variable in accordance with a predetermined rule.

The index of the state variable selected by the selection circuit 13d is supplied to the control circuit 17, and ΔE associated with the change in value of the state variable is supplied to the cumulative value calculation circuit 15.

The update circuit 14 includes a state update holding circuit 14a and a local field update holding circuit 14b.

The state update holding circuit 14a includes, for example, a register, and holds the values of $x_1$ to $x_N$. The state update holding circuit 14a updates the value of the state variable selected by the selection circuit 13d under control of the control circuit 17.

The local field update holding circuit 14b includes, for example, a register, and holds the values of $h_1$ to $h_N$. The local field update holding circuit 14b updates the values of $h_1$ to $h_N$ in accordance with the change in value of the state variable selected by the selection circuit 13d under the control of the control circuit 17. For example, in a case where $x_j$ is a transition candidate, $h_i$ is updated to a value of $h_i = h_i + W_{ij}\Delta x_j$.

Each circuit of the data processing apparatus 10 as described above may be realized by using an electronic circuit such as an application-specific integrated circuit (ASIC) or a field-programmable gate array (FPGA), for example. At least a part of each circuit of the data processing apparatus 10 may be realized by a software process by a processor executing a program. The processor is a central processing unit (CPU), a graphics processing unit (GPU), a digital signal processor (DSP), or the like.

Next, a flow of a data processing method (solution search) by the data processing apparatus 10 as described above will be described with reference to a flowchart.

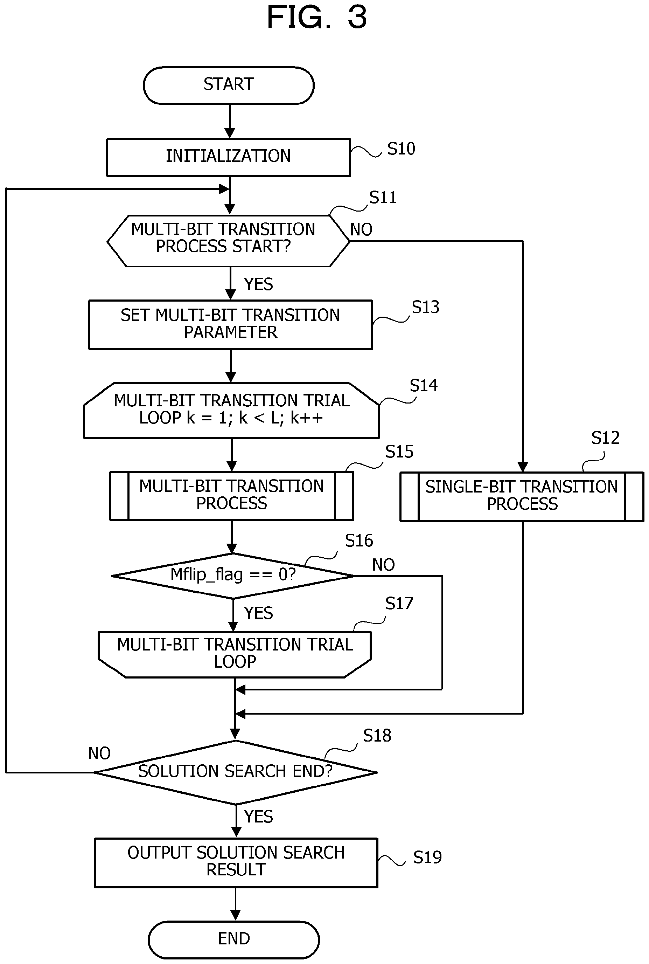

FIG. 3 is a flowchart illustrating an example flow of a data processing method according to the first embodiment.

First, under control of the control circuit 17, initialization is performed (step S10). In the process in step S10, a setting of an initial value of energy or a local field, a setting of an end condition of a solution search, and the like are performed. In a case where a simulated annealing method is performed, for example, a setting of a start value or an end value of a temperature value, a value by which the temperature value is multiplied for each predetermined temperature change cycle, and the like are performed. In a case where a replica exchange method is performed, a temperature value for each replica, a replica exchange cycle, and the like are set.

The control circuit 17 determines whether or not to start a multi-bit transition process (step S11). For example, the control circuit 17 starts a single-bit transition process at a start of the solution search, and starts the multi-bit transition process in a case where a determination result indicating that a change of a value is not accepted is continued for a predetermined period.

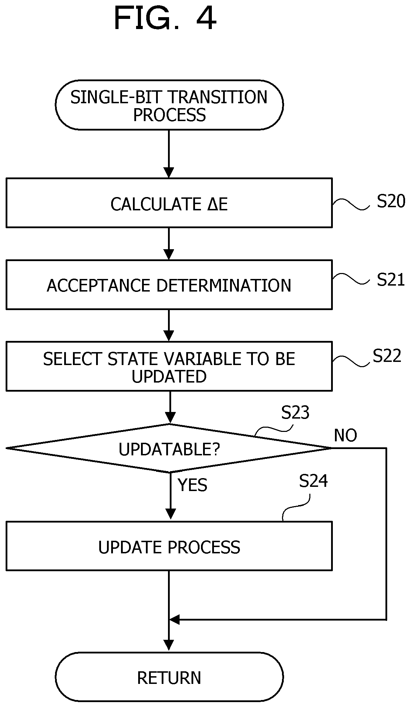

In a case where the control circuit 17 determines not to start the multi-bit transition process, the process in step S12 is performed. The single-bit transition process is performed in the process in step S12. A flow of the single-bit transition process will be described below (refer to FIG. 4). After the process in step S12, the process in step S18 is performed.

In a case where the control circuit 17 determines to start the multi-bit transition process, the process in step S13 is performed. In the process in step S13, various multi-bit transition parameters to be used when the multi-bit transition process is performed are set. Examples of the various multi-bit transition parameters include n, which is the transition bit depth described above, and the number L of repeated trials, which is the number of times trials of the multi-bit transition process are repeated. n or L may be input to the data processing apparatus 10 by a user, or may be set in advance in a holding circuit such as a register in the data processing apparatus 10. The control circuit 17 sets, to 0, a flag variable Mflip_flag that becomes 1 in a case where a change in values of the plurality of transition candidates is permitted.

After the process in step S13, during a period from $k = 1$ to $k < L$, a process of a multi-bit transition trial loop (steps S14 to S17) is repeated.

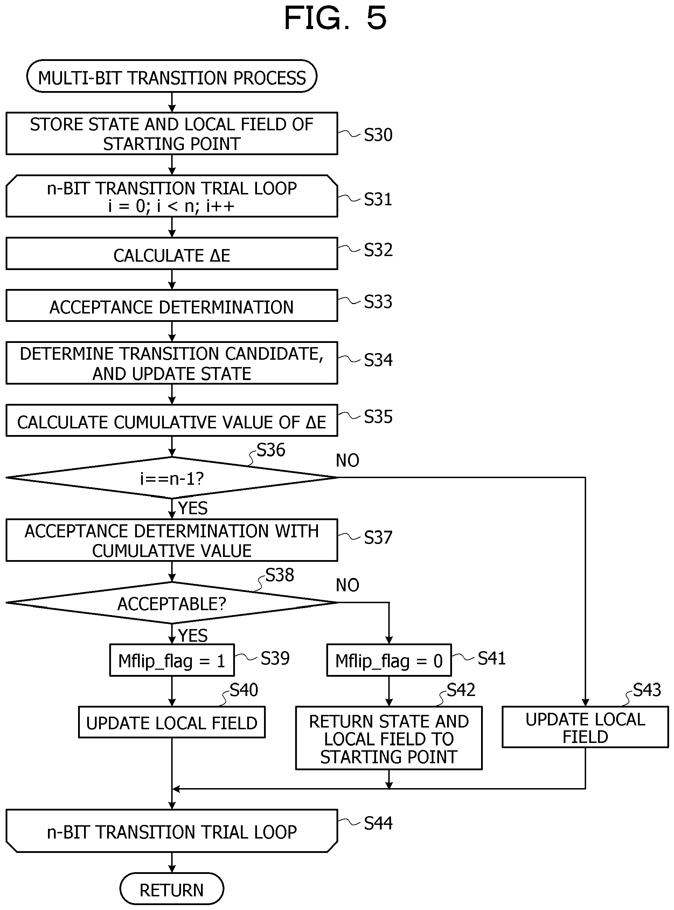

The multi-bit transition process is performed in the multi-bit transition trial loop (step S15). A flow of the multi-bit transition process will be described below (refer to FIG. 5).

After the process in step S15, the control circuit 17 determines whether or not Mflip_flag is 0 (step S16). In a case where it is determined that Mflip_flag is 0, the control circuit 17 increments k by 1 when $k < L$, and repeats the process from step S15.

In a case where it is determined that Mflip_flag is not 0 or when k reaches L, the control circuit 17 performs the process in step S18.

In the process in step S18, the control circuit 17 determines whether or not to end the solution search. For example, in a case where a predetermined end condition is satisfied, the control circuit 17 determines to end the solution search, outputs a solution to a combinatorial optimization problem, which is a result of the solution search (step S19), and ends the process. For example, when it is determined to end the solution search in the process in step S19, the values of $x_1$ to $x_N$ held in the lowest energy update holding circuit 20 are output as the solution to the combinatorial optimization problem. The control circuit 17 may cause a display device (not illustrated) to display the solution, or cause a communication circuit (not illustrated) to transmit the solution to an external apparatus.

In a case where it is determined not to end the solution search, the control circuit 17 repeats the process from step S11.

FIG. 4 is a flowchart illustrating an example flow of a single-bit transition process.

By using values of $h_1$ to $h_N$ stored in the memory 12, the transition candidate determination circuit 13 calculates $\Delta E$ for each of the N state variables, in accordance with Equation (2) described above (step S20).

The transition candidate determination circuit 13 performs an acceptance determination (step S21). For example, based on $\Delta E$ for each of the N state variables and a temperature value supplied from the control circuit 17, the transition candidate determination circuit 13 accepts a change in value of each state variable with an acceptance probability represented by Equation (3).

In a case where the change of the values of the plurality of state variables is accepted, the transition candidate determination circuit 13 selects one state variable to be updated (step S22).

After that, the transition candidate determination circuit 13 determines whether or not the update is possible (step S23). For example, in the process in step S21, in a case where the change in value is not accepted for any state variable, it is determined that the update is not possible.

In a case where the transition candidate determination circuit 13 determines that the update is possible, the update circuit 14 performs an update process (step S24). By the update process, the value of the state variable which is determined to be updatable is changed. Based on the change, the values of $h_1$ to $h_N$ are updated. At this time, the energy update holding circuit 18 updates the held energy, based on $\Delta E$ according to the change in value of the state variable that is set to be updatable. In a case where the updated energy is smaller than the lowest energy held in the lowest energy update holding circuit 20, the lowest energy is updated and is held in the lowest energy update holding circuit 20, together with the current values of $x_1$ to $x_N$.

In a case where it is determined in the process in step S23 that the update is not possible, or after the process in step S24, the process of the data processing apparatus 10 returns to the process in step S18 illustrated in FIG. 3.

FIG. 5 is a flowchart illustrating an example flow of a multi-bit transition process.

The memory 12 stores states and local fields at a starting point (step S30).

After that, during a period from $i = 0$ to $i < n$, the following process of an n-bit transition trial loop (steps S31 to S44) is repeated.

By the n-bit transition trial loop, the transition candidate determination circuit 13 uses values of $h_1$ to $h_N$ stored in the memory 12 to calculate $\Delta E_1$ to $\Delta E_N$, in accordance with Equation (2) described above (step S32).

The transition candidate determination circuit 13 performs an acceptance determination (step S33). According to a rule of the process described above, the transition candidate determination circuit 13 accepts a change in value of at least one state variable.

In a case of accepting the change of the values of a plurality of state variables, the transition candidate determination circuit 13 selects one of the state variables, and determines the selected state variable as a transition candidate.

The update circuit 14 updates the state by changing a value of the transition candidate (step S34). The update of the state here is a temporary update.

After the process in step S34, the cumulative value calculation circuit 15 calculates a cumulative value of ΔE when the value of the transition candidate is changed (step S35).

After the process in step S35, the control circuit 17 determines whether or not i is n-1 (step S36). In a case where the control circuit 17 determines that i is n-1, the process in step S37 is performed, and in a case where the control circuit 17 determines that i is not n-1, the process in step S43 is performed.

In the process in step S37, the determination circuit 16 determines whether or not to accept a change of values of the n transition candidates, based on the cumulative value of ΔE according to an MCMC method.

The control circuit 17 causes the determination circuit 16 to determine whether or not to accept the change of the values of the n transition candidates (step S38). In a case where the determination circuit 16 determines that the change of the values of the n transition candidates is accepted, the control circuit 17 performs the process in step S39. In a case where the determination circuit 16 determines that the change of the values of the n transition candidates is not accepted, the control circuit 17 performs the process in step S41.

In the process in step S39, the control circuit 17 sets a value of Mflip_flag to 1. After that, the update circuit 14 updates the values of the local fields ($h_1$ to $h_N$), in accordance with the change of the values of the n-th transition candidate (step S40).

In the process in step S41, the control circuit 17 sets the value of Mflip_flag to 0. After that, the control circuit 17 returns the state and the value of the local field to the stored state and value of the local field at the starting point (step S42).

After the processes in steps S40 and S42, since i is incremented by 1 and i = n, the process of the data processing apparatus 10 exits from the n-bit transition trial loop, and returns to the process in step S18 illustrated in FIG. 3.

By the process in step S43, the update circuit 14 updates the values of the local fields ($h_1$ to $h_N$), in accordance with the change of the value of the transition candidate determined this time. After that, i is incremented by 1, and the n-bit transition trial loop is repeated.

Although the example in which the acceptance determination is performed based on the cumulative values of ΔE for all of the n transition candidates is described in the example in FIG. 5, the present disclosure is not limited thereto. For example, the acceptance determination may be performed based on a cumulative value of ΔE calculated every time a transition candidate is determined. An example of the multi-bit transition process in this case will be described below.

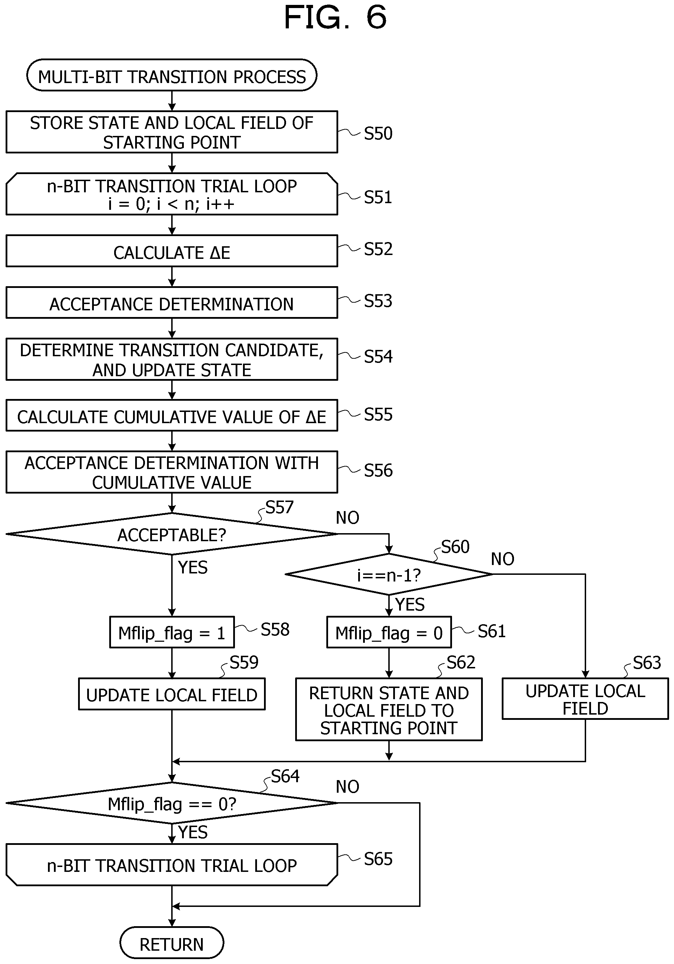

FIG. 6 is a flowchart illustrating a flow of another example of the multi-bit transition process.

The processes in steps S50 to S55 have the same manner as the processes in steps S30 to S35 illustrated in FIG. 5.

After the process in step S55, based on control by the control circuit 17, the determination circuit 16 determines whether or not to accept a change of values of i+1 transition candidates determined so far based on the current cumulative value of ΔE in accordance with the MCMC method (step S56).

The control circuit 17 causes the determination circuit 16 to determine whether or not to accept the change of the values of the i+1 transition candidates (step S57). In a case where the determination circuit 16 determines that the change of the values of the i+1 transition candidates is accepted, the control circuit 17 performs the process in step S58. In a case where the determination circuit 16 determines that the change of the values of the i+1 transition candidates is not accepted, the control circuit 17 performs the process in step S60.

In the process in step S58, the control circuit 17 sets the value of Mflip_flag to 1. After that, the update circuit 14 updates the values of the local fields ($h_1$ to $h_N$), in accordance with the change of the values of the (i+1)-th transition candidate (step S59).

At the process in step S60, the control circuit 17 determines whether or not i is n-1. In a case where the control circuit 17 determines that i is n-1, the process in step S61 is performed, and in a case where the control circuit 17 determines that i is not n-1, the process in step S63 is performed.

In the process in step S61, the control circuit 17 sets the value of Mflip_flag to 0. After that, the control circuit 17 returns the state and the value of the local field to the stored state and value of the local field at the starting point (step S62).

By the process in step S63, the update circuit 14 updates the values of the local fields ($h_1$ to $h_N$), in accordance with the change of the value of the transition candidate determined this time.

After the processes in steps S59, S62, and S63, the control circuit 17 determines whether or not the value of Mflip_flag is 0 (step S64).

In a case where it is determined that the value of Mflip_flag is 0, i is incremented by 1, and in a case of i < n, the n-bit transition trial loop is repeated. In a case where i = n is reached, the process of the data processing apparatus 10 exits from the n-bit transition trial loop, and returns to the process in step S18 illustrated in FIG. 3.

In a case where it is determined that the value of Mflip_flag is not 0, the process of the data processing apparatus 10 exits from the n-bit transition trial loop, and returns to the process in step S18 illustrated in FIG. 3.

According to the data processing method as illustrated in FIG. 6, even before the n transition candidates are determined, in a case where the determination circuit 16 determines that a change of the values of the i+1 transition candidate is accepted based on the cumulative value of $\Delta E$, the process is shifted to the next multi-bit transition process or single-bit transition process. Therefore, efficiency of the solution search is improved.

The order of the processes illustrated in FIGs. 3 to 6 is merely an example, and may be changed as appropriate.

(Example of Pipeline Process)

The process described above may be performed in parallel for a plurality of replicas of an Ising model by using a pipeline process. The memory 12 stores values of $x_1$ to $x_N$ and values of $h_1$ to $h_N$, for the number of the plurality of replicas. Although the memory 12 may store the values of $x_1$ to $x_N$ and the values of $h_1$ to $h_N$ at a starting point, for the number of the plurality of replicas, the values may be common to all the replicas. $W_{ij}$ stored in the weight coefficient memory 11 is common to all the replicas.

The control circuit 17 causes the transition candidate determination circuit 13, the update circuit 14, the cumulative value calculation circuit 15, and the determination circuit 16 to perform the pipeline process on the plurality of replicas. The control circuit 17 may perform control such that a single-bit transition process is performed on some replicas.

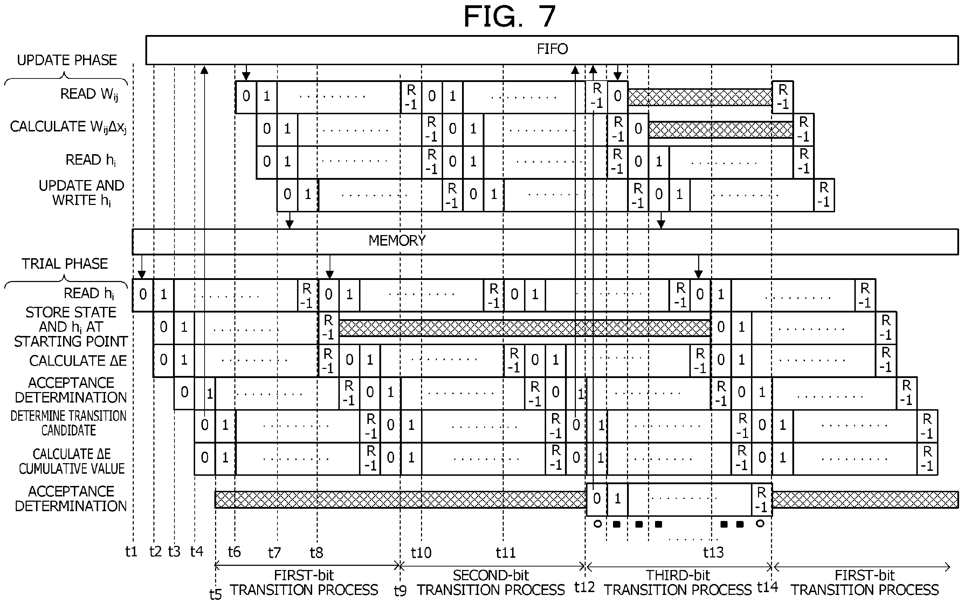

FIG. 7 is a diagram illustrating an example of the pipeline process. FIG. 7 illustrates an example in which the multi-bit transition process illustrated in FIG. 5 is performed by the pipeline process. The multi-bit transition process illustrated in FIG. 6 may be performed by the pipeline process.

Denotement of 0 to R-1 in FIG. 7 indicates replica numbers of R replicas. In the example illustrated in FIG. 7, a trial by the multi-bit transition with a transition bit depth n of 3 bits is started at the same timing in all the replicas. Since the control circuit 17 may control each replica as an independent process, the start timing of the trial or the value of n may differ between the plurality of replicas. FIFO is used to adjust an operation timing in the pipeline process.

A process performed by each replica is divided into an update phase and a trial phase. The update phase includes reading of $W_{ij}$ by the update circuit 14, a calculation of $W_{ij}\Delta x_j$ (= $\Delta h_i$), reading of the original $h_i$, and a process of updating $h_i$ and writing the updated $h_i$ to the memory 12. The trial phase includes reading of $h_i$ by the transition candidate determination circuit 13 and storing of a state and $h_i$ at a starting point by the memory 12. The trial phase includes a calculation of $\Delta E$ by the transition candidate determination circuit 13, an acceptance determination based on $\Delta E$, a determination of a transition candidate, a calculation of a cumulative value of $\Delta E$ by the cumulative value calculation circuit 15, and an acceptance determination based on the cumulative value by the determination circuit 16.

The trial phase for determining a first transition candidate is started from a timing t1. For each replica in turn, $h_i$ is read from the memory 12, and held in the local field holding register 13a. For each replica in turn from a timing t2, the state and $h_i$ at the starting point are stored in the memory 12, and $\Delta E$ is calculated. The acceptance determination based on $\Delta E$ is performed for each replica in turn from a timing t3. The determination of the transition candidate and the calculation of the cumulative value of $\Delta E$ are performed for each replica in turn from a timing t4. In the example illustrated in FIG. 7, the acceptance determination based on the cumulative value of $\Delta E$ is not performed until a third transition candidate is determined.

After the first transition candidate is determined for each replica in turn from the timing t4, an index of the state variable is supplied to the control circuit 17 via FIFO. After that, the update phase (first-bit transition process (timings t5 to t9)) for the first transition candidate is performed.

For each replica in turn from the timing t6, the control circuit 17 reads $W_{ij}$ corresponding to the index of the transition candidate from the weight coefficient memory 11. For each replica in turn from the timing t7, $h_i$ updated by using read $W_{ij}$ is written to the memory 12.

From the timing t8, the trial phase for determining a second transition candidate is started, and the same process as the process at the timings t1 to t4 is performed. From the timing t9, the update phase (second-bit transition process (timings t9 to t12)) associated with the determination of the second transition candidate is started, and the same process as the process at the timings t5 to t9 is performed.

From a timing t11, the trial phase for determining the third transition candidate is started, and the same process as the process at the timings t1 to t4 is performed. After the third transition candidate is determined, the acceptance determination based on the cumulative value of $\Delta E$ is performed (after the timing t12). In FIG. 7, a white circle indicates that it is determined to be acceptable, and a black square indicates that the acceptance is rejected.

In the example illustrated in FIG. 7, replicas having replica numbers = 0 and R-1 are determined to be acceptable, and the acceptance of the other replicas is rejected. Thus, the update phase is executed for the replicas with the replica numbers = 0 and R-1. For the other replicas, the update phase is not executed, and the state and the local field at the starting point are read and written to the memory 12 as the current state and local field.

For example, a result of the acceptance determination based on the cumulative value of $\Delta E$ for the replica having the replica number = 0 is supplied to the control circuit 17 via FIFO. From the timing t12, the process of the update phase (third-bit transition process (timings t12 to t14)) in the same manner as the process at the timings t5 to t9 is performed.

From the timing t13, the state and $h_i$ at the starting point for the next multi-bit transition are stored in the memory 12. For the replicas having the replica numbers = 0 and R-1 for which 3-bit transition is permitted, the updated state and $h_i$ are stored. For the other replicas, the already stored state and $h_i$ at the starting point are maintained.

For example, in a case where the pipeline process as described above is performed, a state indicating the lowest energy among energies obtained while the process of each replica is repeated a predetermined number of times of trials is output as a solution. The pipeline process described above may be applied to a solution search using a simulated annealing method, and may be applied to a solution search using a replica exchange method.

By performing control such that the plurality of different replicas perform different processes in the same period by the pipeline process, the control circuit 17 enables the plurality of replicas to be processed simultaneously in parallel. For example, as illustrated in FIG. 7, while the control circuit 17 executes the calculation of $\Delta E$ for a replica having a replica number = 1, the control circuit 17 executes the acceptance determination for the replica having the replica number = 0.

As illustrated in FIG. 7, one step (each process of the trial phase + the update phase) of each replica process is in the same period in each process (first-bit transition process, second-bit transition process, and third-bit transition process) in which the value of one transition candidate is changed. Therefore, a delay in the pipeline of each replica process may be concealed.

With the data processing apparatus 10 and the data processing method of the first embodiment as described above, the state and the local field at a predetermined time point (the starting point in the example described above) are stored. From that time point on, the local field is updated by changing the values of the transition candidates determined one by one, and it is determined whether or not to accept the changes of the values of the transition candidates based on the cumulative value of $\Delta E$. Even when the state or the local field is updated based on the change of the value of the transition candidate, the state or the local field returns to the state and the local field at the predetermined time point stored in advance described above, at a time of the acceptance rejection described above. In this manner, a complicated propagation mechanism or the like of the local field for realizing the multi-bit transition is not desirable. Therefore, independence of an arithmetic element for each bit may be increased, a circuit configuration is simplified, and implementation of the multi-bit transition process is facilitated. Therefore, large-scale parallelization may be achieved. Even when the number (n) of transition candidates is changed, the process may be performed by the same circuit, and thus the degree of search freedom is high.

Since the single-bit transition process and the multi-bit transition process may be realized by the same circuit, an operation mode may be easily switched.

Without complicating the circuit configuration, it is possible to realize the pipeline process using the plurality of replicas as illustrated in FIG. 7, and high performance may be expected.

(Second Embodiment)

A data processing apparatus according to a second embodiment to be described below divides N state variables into a plurality of state variable groups, and uses a plurality of modules to execute a determination of n transition candidates, an update process, a calculation of a cumulative value, or the like in parallel for each state variable group. Although an example in which the N state variables are divided into four state variable groups and the process is performed by four modules will be described below, the numbers are not limited to this.

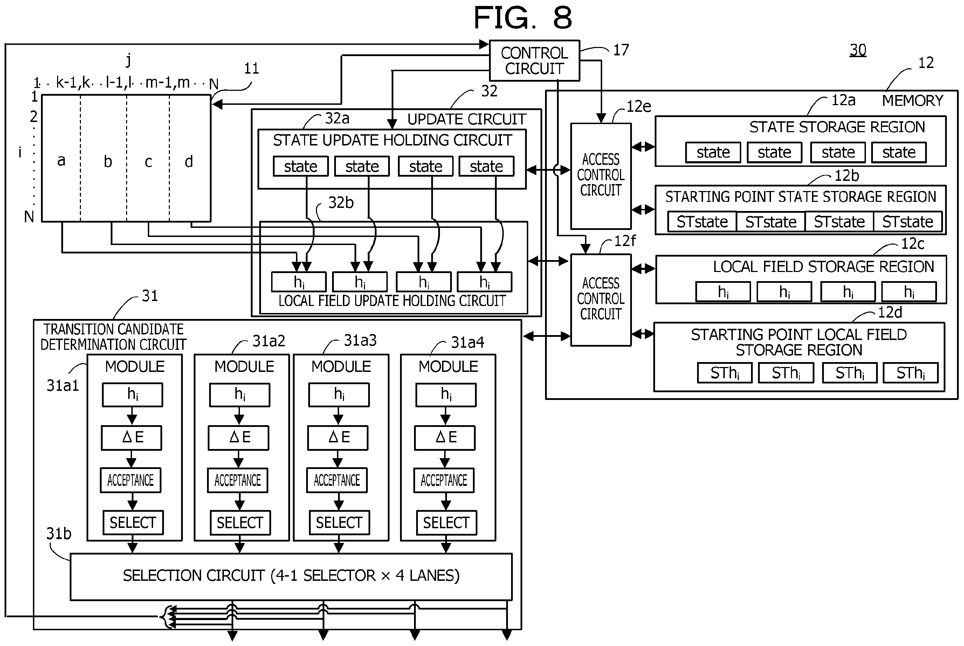

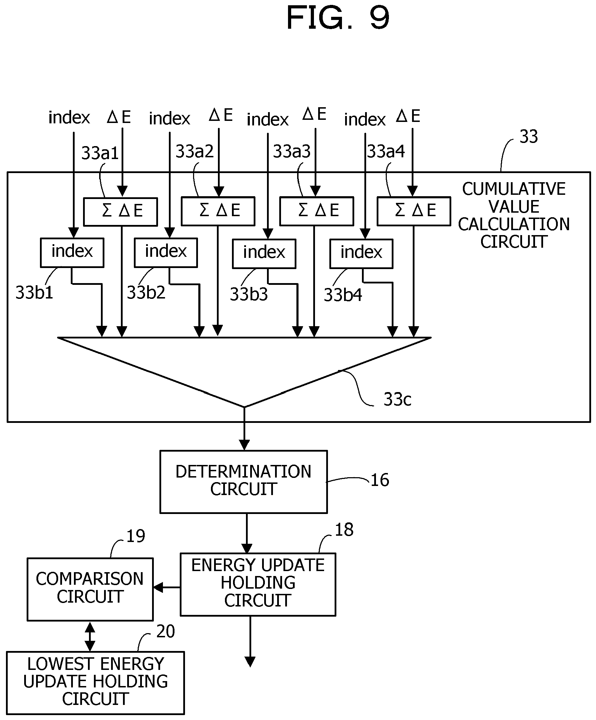

FIG. 8 and FIG. 9 are diagrams illustrating an example of a data processing apparatus according to the second embodiment. In FIG. 8 and FIG. 9, the same elements as the elements illustrated in FIG. 1 and FIG. 2 are denoted by the same reference signs.

In a data processing apparatus 30 according to the second embodiment, a transition candidate determination circuit 31 is divided into modules 31a1, 31a2, 31a3, and 31a4. The modules 31a1 to 31a4 determine n transition candidates one by one, within ranges of state variable groups different from each other, among $x_1$ to $x_N$.

In the following example, it is assumed that the module 31a1 handles a state variable group of $x_1$ to $x_{k-1}$, the module 31a2 handles a state variable group of $x_k$ to $x_{l-1}$, the module 31a3 handles a state variable group of $x_l$ to $x_{m-1}$, and the module 31a4 handles a state variable group of $x_m$ to $x_N$.

Each of the modules 31a1 to 31a4 is provided with the local field holding register 13a, the $\Delta E$ calculation holding circuit 13b, the acceptance determination circuit 13c, and the selection circuit 13d illustrated in FIG. 2. As illustrated in FIG. 8, the local field holding register 13a is denoted by "$h_i$", the $\Delta E$ calculation holding circuit 13b is denoted by "$\Delta E$", the acceptance determination circuit 13c is denoted by "acceptance", and the selection circuit 13d is denoted by "selection".

The transition candidate determination circuit 31 includes a selection circuit 31b. Under control of the control circuit 17, the selection circuit 31b supplies $\Delta E$ by a change in value of a transition candidate output from the modules 31a1 to 31a4 to one of calculation circuits 33a1, 33a2, 33a3, 33a4 for cumulative values of the modules 31a1 to 31a4.

An index of the transition candidate is also selected in the same manner, and is supplied to one of holding circuits 33b1, 33b2, 33b3, and 33b4 for the modules 31a1 to 31a4.

The index and ΔE of a first transition candidate output from each of the modules 31a1 to 31a4 may be supplied to the calculation circuits 33a1 to 33a4 and the holding circuits 33b1 to 33b4 for any module. The index and ΔE of a second or subsequent transition candidate output from each of the modules 31a1 to 31a4 are supplied to the calculation circuits 33a1 to 33a4 and the holding circuits 33b1 to 33b4 for the corresponding module, respectively.

As the selection circuit 31b that performs such selection, for example, a 4-1 selector of four lanes may be used.

A set of values of $x_1$ to $x_N$ and values of $h_1$ to $h_N$, and the values of $x_1$ to $x_N$ and the values of $h_1$ to $h_N$ at a starting point is divided by the number of modules, and stored in the memory 12. In FIG. 8, a value of each state variable group of $x_1$ to $x_{k-1}$, $x_k$ to $x_{l-1}$, $x_l$ to $x_{m-1}$, and $x_m$ to $x_N$ is denoted by "state". A value of each local field group of $h_1$ to $h_{k-1}$, $h_k$ to $h_{l-1}$, $h_l$ to $h_{m-1}$, and $h_m$ to $h_N$ is denoted by "$h_i$". The value of each state variable group of $x_1$ to $x_{k-1}$, $x_k$ to $x_{l-1}$, $x_l$ to $x_{m-1}$, and $x_m$ to $x_N$ at the starting point is denoted by "STstate". The value of each local field group of $h_1$ to $h_{k-1}$, $h_k$ to $h_{l-1}$, $h_l$ to $h_{m-1}$, and $h_m$ to $h_N$ at the starting point is denoted by "$STh_i$", respectively.

According to a transition candidate determined by each of the modules 31a1 to 31a4, an update circuit 32 updates "state" and "$h_i$" stored in association with each of the modules 31a1 to 31a4.

The update circuits 32 includes a state update holding circuit 32a and a local field update holding circuit 32b. The state update holding circuit 32a includes, for example, a register, and holds "state" for each of the modules 31a1 to 31a4. The state update holding circuit 32a updates a value of the transition candidate selected by the selection circuit 31b, under the control of the control circuit 17. Since one transition candidate is determined for each of the modules 31a1 to 31a4, a value of any one of the determined four transition candidates is updated in each of the four "state"s.

The local field update holding circuit 32b includes, for example, a register, and holds "$h_i$" for each module. The local field update holding circuit 32b updates the values of $h_1$ to $h_N$ in accordance with the transition candidate determined by each of the modules 31a1 to 31a4, under the control of the control circuit 17. For example, in a case where $x_j$ is a transition candidate, $h_i$ is updated to a value of $h_i = h_i + W_{ij}\Delta x_j$.

Among N×N $W_{ij}$, $W_{ij}$ in a range of j = 1 to k-1 (range of "a" in FIG. 8) is used to update the value of $h_1$ to $h_{k-1}$ for the module 31a1. Among the N×N $W_{ij}$, $W_{ij}$ in a range of j = k to l-1 (range of "b" in FIG. 8) is used to update the value of $h_k$ to $h_{l-1}$ for the module 31a2. Among the N×N $W_{ij}$, $W_{ij}$ in a range of j = l to m-1 (range of "c" in FIG. 8) is used to update the value of $h_l$ to $h_{m-1}$ for the module 31a3. Among the N×N $W_{ij}$, $W_{ij}$ in a range of j = m to N (range of "d" in FIG. 8) is used to update the value of $h_m$ to $h_N$ for the module 31a4.

A cumulative value calculation circuit 33 includes calculation circuits 33a1 to 33a4 that calculate a cumulative value (denoted as "ΣΔE") of ΔE for each of the modules 31a1 to 31a4. The cumulative value calculation circuit 33 includes the holding circuits 33b1 to 33b4 and a selection circuit 33c that hold indices of n transition candidates for each of the modules 31a1 to 31a4.

The selection circuit 33c selects one of the four cumulative values of ΔE. For example, the selection circuit 33c selects the cumulative value of ΔE that causes the lowest energy. Along with the selected cumulative value, the selection circuit 33c outputs the indices of n transition candidates corresponding to the cumulative value.

Based on the selected cumulative value, the determination circuit 16 determines whether or not to accept a change in values of the n transition candidates corresponding to the selected cumulative value.

Next, a flow of the data processing method (solution search) by the data processing apparatus 30 according to the second embodiment will be described with reference to a flowchart.

Since an entire process and a flow of a single-bit transition process have the same manner as the flow of the processes illustrated in FIGs. 3 and 4, the description thereof will be omitted.

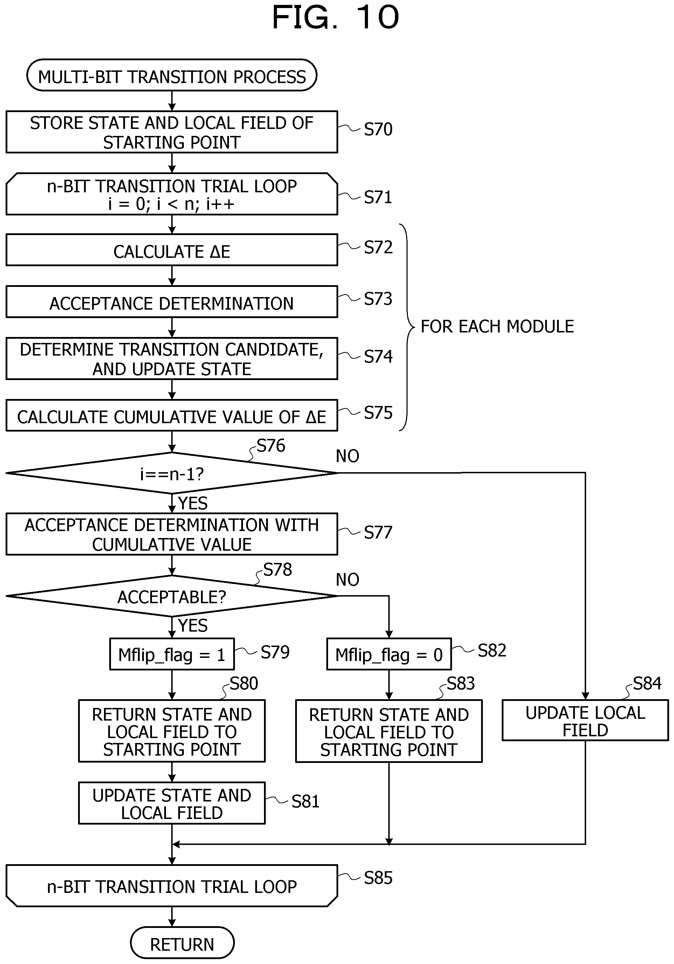

FIG. 10 is a flowchart illustrating an example flow of a multi-bit transition process.

Although processes in steps S70 to S79 have the same manner as the processes in steps S30 to S39 illustrated in FIG. 5, the processes in steps S72 to S75 are performed for each module.

With the data processing apparatus 30 according to the second embodiment, after the process of setting the value of Mflip_flag to 1 (step S79), the control circuit 17 performs a process of returning the state and the value of the local field for each module to the state and the value of the local field stored at the starting point (step S80). This is because the state and the local field stored in the memory 12 are different for each module. After that, the control circuit 17 causes the update circuit 32 to update the state and the value of the local field for each module based on the indices of the n transition candidates held in one of the holding circuits 33b1 to 33b4 (step S81). The processes in steps S82 to S85 have the same manner as the processes in steps S41 to S44 illustrated in FIG. 5.

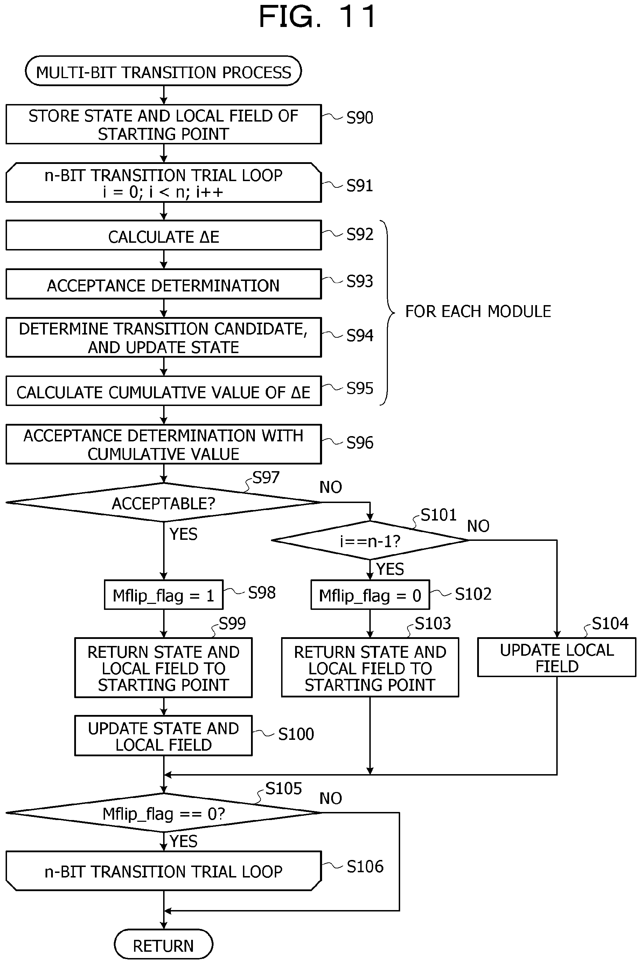

FIG. 11 is a flowchart illustrating a flow of another example of the multi-bit transition process.

The processes in steps S90 to S95 have the same manner as the processes in steps S70 to S75 illustrated in FIG. 10. The processes in steps S96 to S98 have the same manner as the processes in steps S56 to S58 illustrated in FIG. 6.

In the same manner as the process in step S80 illustrated in FIG. 10, the process of returning the state and the value of the local field for each module to the stored state and value of the local field at the starting point is performed in the process in step S99. After that, the control circuit 17 causes the update circuit 32 to update the state and the value of the local field for each module based on the indices of the n transition candidates held in one of the holding circuits 33b1 to 33b4 (step S100). The processes in steps S101 to S106 have the same manner as the processes in steps S60 to S65 illustrated in FIG. 6.

The order of the processes illustrated in FIG. 10 and FIG. 11 is merely an example, and may be changed as appropriate.

(Example of Pipeline Process)

In the same manner as the data process by the data processing apparatus 10 according to the first embodiment, the process described above may also be performed in parallel for a plurality of replicas of an Ising model by using a pipeline process. The memory 12 stores values of $x_1$ to $x_N$ and values of $h_1$ to $h_N$ for each module, for the number of the plurality of replicas. Although the memory 12 may store the values of $x_1$ to $x_N$ and the values of $h_1$ to $h_N$ at a starting point, for the number of the plurality of replicas, the values may be common to all the replicas. Meanwhile, in this case, in order to avoid the plurality of replicas from using the memory 12 at the same time, control is performed such that a multi-bit transition process does not occur in other than one replica in the pipeline process. $W_{ij}$ stored in the weight coefficient memory 11 is common to all the replicas.

The control circuit 17 causes the transition candidate determination circuit 31, the update circuit 32, the cumulative value calculation circuit 33, and the determination circuit 16 to perform the pipeline process on the plurality of replicas. The control circuit 17 may perform control such that a single-bit transition process is performed on some replicas.

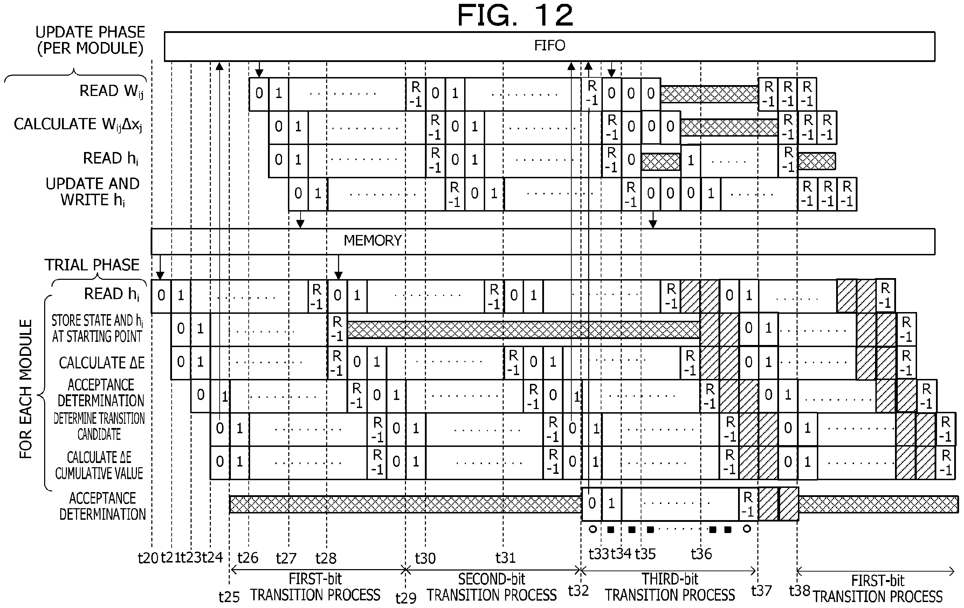

FIG. 12 is a diagram illustrating another example of the pipeline process. FIG. 12 illustrates an example in which the multi-bit transition process illustrated in FIG. 10 is performed by the pipeline process. The multi-bit transition process illustrated in FIG. 11 may be performed by the pipeline process.

A process performed by each replica is divided into an update phase and a trial phase. The update phase includes reading of $W_{ij}$ by the update circuit 32, a calculation of $W_{ij}\Delta x_j$ (= $\Delta h_i$), reading of the original $h_i$, and a process of updating $h_i$ and writing the updated $h_i$ to the memory 12. These processes are performed for each module.

The trial phase includes reading of $h_i$ by the transition candidate determination circuit 31 and storing of a state and $h_i$ at a starting point by the memory 12. These processes are performed for each module. The trial phase includes a calculation of $\Delta E$ by the transition candidate determination circuit 31, an acceptance determination based on $\Delta E$, a determination of a transition candidate, and a calculation of a cumulative value of $\Delta E$ by the cumulative value calculation circuit 33. These processes are also performed for each module. The trial phase includes an acceptance determination based on the cumulative value by the determination circuit 16.

Up to timings t20 to t32, the processes have the same manner as the processes at the timings t1 to t12 illustrated in FIG. 7, except that the process described above is performed for each module. At timings t33 to t35, the process corresponding to the process in step S80 illustrated in FIG. 10 is performed. At timings t34 to t36, the process corresponding to the process in step S81 illustrated in FIG. 10 is performed. By such a process, a waiting time occurs between a timing t37 which is an end timing of a third-bit transition process and a timing t38 which is a start timing of the next first-bit transition process. Alternatively, the control circuit 17 may reduce the waiting time by changing a processing cycle or the like.

With the data processing apparatus 30 and the data processing method according to the second embodiment described above, similar effects to those of the data processing apparatus 10 and the data processing method according to the first embodiment may be obtained. Since the data processing apparatus 30 according to the second embodiment may perform the parallel processes by the plurality of modules, the solution search may be more efficiently performed. Since the circuit configuration for realizing the multi-bit transition process may be simplified as in the data processing apparatus 10 according to the first embodiment, the circuit configuration may be reduced from being complicated even in the configuration in which the parallel search is performed as in the data processing apparatus 30 according to the second embodiment.

(Example of Hardware Configuration)

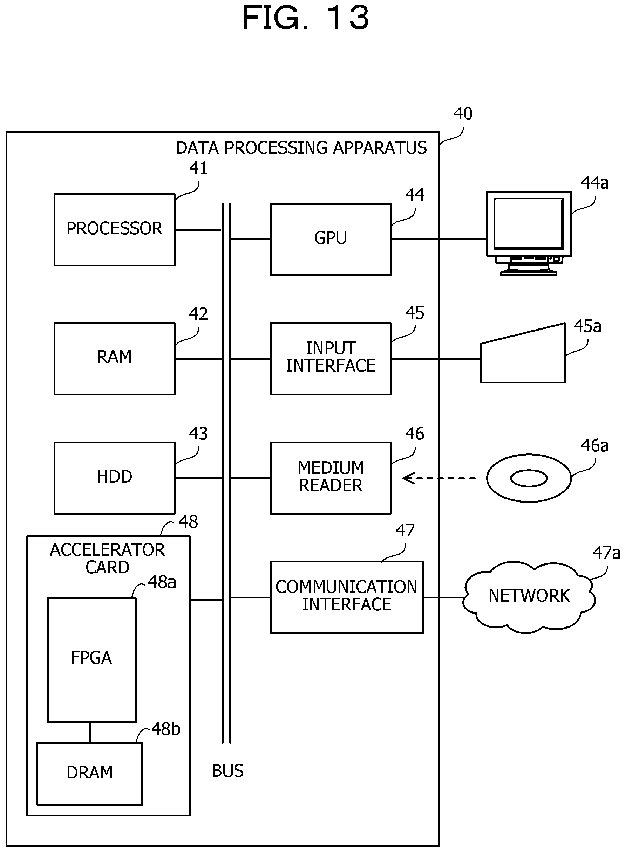

FIG. 13 is a diagram illustrating a hardware example of a data processing apparatus.

A data processing apparatus 40 is, for example, a computer, and includes a processor 41, a RAM 42, an HDD 43, a GPU 44, an input interface 45, a medium reader 46, a communication interface 47, and an accelerator card 48. The units described above are coupled to a bus.

The processor 41 loads at least a part of a program or data stored in the HDD 23 into the RAM 42, and executes the program. For example, the processor 41 may include a plurality of processor cores. The data processing apparatus 40 may include a plurality of processors. A set of the plurality of processors (multiprocessor) may be referred to as a "processor". As the processor 41, a CPU, a GPU, a DSP, or the like may be used.

The RAM 42 is a volatile semiconductor memory that temporarily stores the program to be executed by the processor 41 and data to be used for the arithmetic operation by the processor 41. The data processing apparatus 40 may include a memory of a type other than the RAM 42, and may include a plurality of memories.

The HDD 43 is a non-volatile storage device that stores data as well as programs of software such as an operating system (OS), middleware, and application software. For example, the program includes a program for causing the data processing apparatus 40 to execute a process of searching for a solution to a combinatorial optimization problem. The data processing apparatus 40 may include another type of storage device such as a flash memory or a solid-state drive (SSD), and may include a plurality of non-volatile storage devices.

According to an instruction from the processor 41, the GPU 44 outputs an image to a display 44a coupled to the data processing apparatus 40. As the display 44a, a cathode ray tube (CRT) display, a liquid crystal display (LCD), a plasma display panel (PDP), an organic electro-luminescence (OEL) display, or the like may be used.

The input interface 45 acquires an input signal from an input device 45a coupled to the data processing apparatus 40, and outputs the input signal to the processor 41. As the input device 45a, a pointing device such as a mouse, a touch panel, a touch pad, or a trackball, a keyboard, a remote controller, a button switch, and the like may be used. A plurality of types of input devices may be coupled to the data processing apparatus 40.

The medium reader 46 is a reading apparatus that reads a program or data recorded on a recording medium 46a. As the recording medium 46a, for example, a magnetic disk, an optical disk, a magneto-optical disk (MO), a semiconductor memory, or the like may be used. The magnetic disk includes a flexible disk (FD) or an HDD. The optical disk includes a compact disc (CD) or a Digital Versatile Disc (DVD).

For example, the medium reader 46 copies a program or data read from the recording medium 46a to another recording medium such as the RAM 42 or the HDD 43. For example, the read program is executed by the processor 41. The recording medium 46a may be a portable-type recording medium or may be used to distribute the program or data. The recording medium 46a or the HDD 43 may be referred to as a computer-readable recording medium.

The communication interface 47 is an interface that is coupled to a network 47a and communicates with another information processing apparatus via the network 47a. The communication interface 47 may be a wired communication interface coupled to a communication apparatus such as a switch via a cable or may be a wireless communication interface coupled to a base station via a wireless link.

The accelerator card 48 is a hardware accelerator that searches for a solution to a combinatorial optimization problem. The accelerator card 48 includes an FPGA 48a and a DRAM 48b.

Each element illustrated in FIGs. 1, 8, and 9 may be realized by the FPGA 48a and the DRAM 48b. For example, the weight coefficient memory 11 may be realized by the DRAM 48b, and the other circuits or the memory 12 may be realized by the FPGA 48a.

A plurality of accelerator cards 48 may be provided.

The process contents described above (for example, FIGs. 3 to 6, 10, 11, and the like) performed by the data processing apparatuses 10 and 30 may be realized by software by causing a computer to execute a program.

The program may be recorded on a computer-readable recording medium. As the recording medium, for example, a magnetic disk, an optical disk, a magneto-optical disk, a semiconductor memory, or the like may be used. The magnetic disk includes a flexible disk and an HDD. The optical disk includes a CD, a CD-recordable (R)/rewritable (RW), a DVD, and a DVD-R/RW. The program may be recorded in a portable-type recording medium and distributed. In such a case, the program may be copied from the portable-type recording medium to another recording medium and executed.

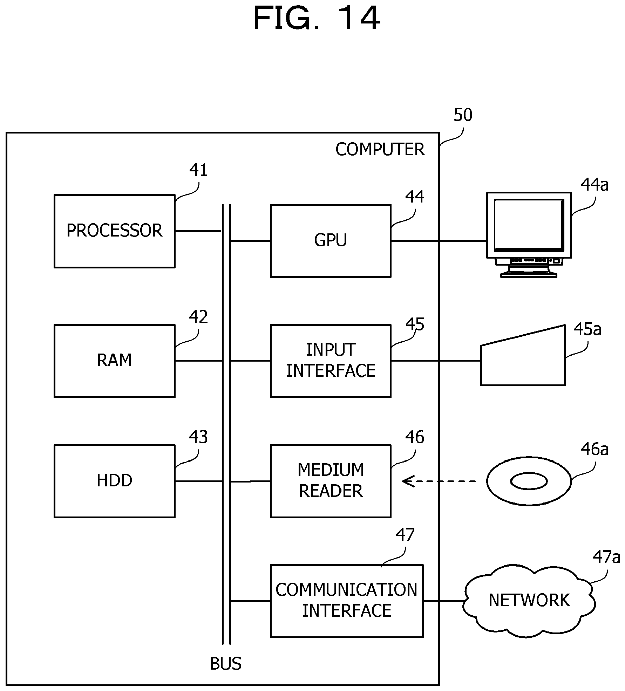

FIG. 14 is a diagram illustrating a hardware example of a computer. The same elements as the elements illustrated in FIG. 13 are denoted by the same reference signs.

The accelerator card 48 illustrated in FIG. 13 is not provided in a computer 50.

By executing a program in the computer 50, the processor 41 executes the process contents described above (for example, FIGs. 3 to 6, 10, 11, and the like). The processor 41 may include a plurality of processor cores to execute processes of a plurality of replicas in parallel. The HDD 43 may be used as the weight coefficient memory 11 illustrated in FIG. 1 or the like, and the RAM 42 may be used as the memory 12.

Although aspects of the data processing apparatus, the program, and the data processing method according to the present disclosure have been described above based on the embodiments, the embodiments are merely exemplary and not limited to the above description.

## Claims

**1.** A data processing apparatus comprising:

a memory that stores values of a plurality of state variables included in an evaluation function of a combinatorial optimization problem, values of local fields of each of the plurality of state variables, values of the plurality of state variables at a predetermined time point, and values of the local fields at the predetermined time point;
a transition candidate determination circuit that calculates, based on the value of the local field, a change amount of a value of the evaluation function when the value of each of the plurality of state variables is changed, and determines, one by one, a candidate of which a value is to be changed among the plurality of state variables, from the predetermined time point;
an update circuit that updates, every time the candidate is determined, the value of the candidate and the value of the local field stored in the memory;
a cumulative value calculation circuit that calculates a cumulative value of the change amount when the value of the candidate is changed;
a determination circuit that determines whether to accept a change in values of a first number, which is equal to or more than 2, of the candidates, based on the cumulative value; and
a control circuit that, in a case where the determination circuit determines that the change in values of the first number of the candidates is not accepted, returns the updated values of the plurality of state variables and the updated values of the local fields to the values of the plurality of state variables and the values of the local fields at the predetermined time point.

2. The data processing apparatus according to claim 1,

wherein the control circuit switches between causing the transition candidate determination circuit to perform a first process of determining whether to permit a change in each value of the plurality of state variables based on the change amount and causing the transition candidate determination circuit to perform a second process of determining the candidate one by one from the predetermined time point, and
the predetermined time point is a time point at which the second process is started.

3. The data processing apparatus according to claim 1,

wherein the memory stores the values of the plurality of state variables and the values of the local fields, for the number of a plurality of replicas, and
the control circuit causes the transition candidate determination circuit, the update circuit, the cumulative value calculation circuit, and the determination circuit to perform a pipeline process on the plurality of replicas.

4. The data processing apparatus according to claim 1,
wherein the determination circuit determines whether to accept a change in value of a second number, which is smaller than the first number, of the candidates, based on the cumulative value of the change amount in a case where a value of the second number of the candidates is changed.

5. The data processing apparatus according to claim 1,

wherein the transition candidate determination circuit is divided into a plurality of modules, and the plurality of modules determine n candidates one by one within a range of state variable groups different from each other, among the plurality of state variables,
a set of the values of the plurality of state variables, the values of the local fields, the values of the plurality of state variables at the predetermined time point, and the values of the local fields at the predetermined time point is divided by the number of the plurality of modules and stored in the memory,
the update circuit updates the values of the plurality of state variables and the values of the local fields stored in association with each of the plurality of modules, in accordance with the candidate determined by each of the plurality of modules,
the cumulative value calculation circuit calculates the cumulative value for each of the plurality of modules, and selects one of cumulative values respectively calculated for the plurality of modules, and
based on the selected cumulative value, the determination circuit determines whether to accept a change in value of the first number of the candidates which correspond to the selected cumulative value.

6. The data processing apparatus according to claim 5,

wherein the control circuit
causes, in a case where the determination circuit determines to accept the change in value of the first number of the candidates, the update circuit to return the values of the plurality of state variables and the values of the local fields of the plurality of modules stored in the memory to the values of the plurality of state variables and the values of the local fields at the predetermined time point, and then update the plurality of state variables and the values of the local fields in accordance with the first number of the candidates, and
returns, in a case where the determination circuit determines that the change in value of the first number of the candidates is not accepted, the updated values of the plurality of state variables and the updated values of the local fields of the plurality of modules to the values of the plurality of state variables and the values of the local fields at the predetermined time point.

**7.** A non-transitory computer-readable storage medium storing a data processing program that causes at least one computer to execute a process, the process comprising:

storing values of a plurality of state variables included in an evaluation function of a combinatorial optimization problem, values of local fields of each of the plurality of state variables, values of the plurality of state variables at a predetermined time point, and values of the local fields at the predetermined time point;
calculating, based on the value of the local field, a change amount of a value of the evaluation function when the value of each of the plurality of state variables is changed, and determines, one by one, a candidate of which a value is to be changed among the plurality of state variables, from the predetermined time point;
updating, every time the candidate is determined, the value of the candidate and the value of the local field stored in the memory;
calculating a cumulative value of the change amount when the value of the candidate is changed;
determining whether to accept a change in values of a first number, which is equal to or more than 2, of the candidates, based on the cumulative value; and
in a case where the determination circuit determines that the change in values of the first number of the candidates is not accepted, returning the updated values of the plurality of state variables and the updated values of the local fields to the values of the plurality of state variables and the values of the local fields at the predetermined time point.

**8.** The data processing program according to claim 7, wherein the process further comprising

switching between performing a first process and performing a second process,
wherein the first process is determining whether to accept a change in each value of the plurality of state variables based on the change amount, and
the second process is determining one of the plurality of state variables one by one from the predetermined time point, and
the certain time point is a time point at which the second process is started.

**9.** The data processing program according to claim 7, wherein

a number of values of the plurality of state variables and a number of values of local fields of the each of the plurality of state variables, is a number of a plurality of replicas,
wherein the process further comprising
performing the acquiring the change amount, the updating, the acquiring the cumulative value, and the determining by a pipeline process on the plurality of replicas.

**10.** The data processing program according to claim 7, wherein the process further comprising determining whether to accept a change in value of a second number, which is smaller than the first number, of the candidates, based on the cumulative value of the change amount in a case where a value of the second number of the candidates is changed.

**11.** A data processing method for a computer to execute a process comprising:

a memory that stores values of a plurality of state variables included in an evaluation function of a combinatorial optimization problem, values of local fields of each of the plurality of state variables, values of the plurality of state variables at a predetermined time point, and values of the local fields at the predetermined time point;
a transition candidate determination circuit that calculates, based on the value of the local field, a change amount of a value of the evaluation function when the value of each of the plurality of state variables is changed, and determines, one by one, a candidate of which a value is to be changed among the plurality of state variables, from the predetermined time point;
an update circuit that updates, every time the candidate is determined, the value of the candidate and the value of the local field stored in the memory;
a cumulative value calculation circuit that calculates a cumulative value of the change amount when the value of the candidate is changed;
a determination circuit that determines whether to accept a change in values of a first number, which is equal to or more than 2, of the candidates, based on the cumulative value; and
a control circuit that, in a case where the determination circuit determines that the change in values of the first number of the candidates is not accepted, returns the updated values of the plurality of state variables and the updated values of the local fields to the values of the plurality of state variables and the values of the local fields at the predetermined time point.

**12.** The data processing method according to claim 11, wherein the process further comprising

switching between performing a first process and performing a second process,
wherein the first process is determining whether to accept a change in each value of the plurality of state variables based on the change amount, and
the second process is determining one of the plurality of state variables one by one from the predetermined time point, and
the certain time point is a time point at which the second process is started.

**13.** The data processing method according to claim 11, wherein

a number of values of the plurality of state variables and a number of values of local fields of the each of the plurality of state variables, is a number of a plurality of replicas,
wherein the process further comprising
performing the acquiring the change amount, the updating, the acquiring the cumulative value, and the determining by a pipeline process on the plurality of replicas.

**14.** The data processing method according to claim 11, wherein the process further comprising
determining whether to accept a change in value of a second number, which is smaller than the first number, of the candidates, based on the cumulative value of the change amount in a case where a value of the second number of the candidates is changed.

# FIG. 1

10
11
WEIGHT COEFFICIENT MEMORY
14
UPDATE CIRCUIT
17
CONTROL CIRCUIT
12
MEMORY
STATE
STARTING POINT STATE
LOCAL FIELD
STARTING POINT LOCAL FIELD
13
TRANSITION CANDIDATE DETERMINATION CIRCUIT
15
CUMULATIVE VALUE CALCULATION CIRCUIT
16
DETERMINATION CIRCUIT
19
COMPARISON CIRCUIT
18
ENERGY UPDATE HOLDING CIRCUIT
20
LOWEST ENERGY UPDATE HOLDING CIRCUIT

# FIG. 2

11
WEIGHT COEFFICIENT MEMORY
17
CONTROL CIRCUIT
14
UPDATE CIRCUIT
14a
STATE UPDATE HOLDING CIRCUIT
14b
LOCAL FIELD UPDATE HOLDING CIRCUIT
12
MEMORY
12e
ACCESS CONTROL CIRCUIT
12a
STATE STORAGE REGION
STARTING POINT STATE STORAGE REGION
12b
12f
ACCESS CONTROL CIRCUIT
12c
LOCAL FIELD STORAGE REGION
STARTING POINT LOCAL FIELD STORAGE REGION
12d
13
TRANSITION CANDIDATE DETERMINATION CIRCUIT
LOCAL FIELD HOLDING REGISTER
13a
ΔE CALCULATION HOLDING CIRCUIT
13b
ACCEPTANCE DETERMINATION CIRCUIT
13c
13d
CUMULATIVE VALUE CALCULATION CIRCUIT
15

FIG. 3

START
INITIALIZATION
S10
S11
MULTI-BIT TRANSITION PROCESS START?
NO
YES
SET MULTI-BIT TRANSITION PARAMETER
S13
MULTI-BIT TRANSITION TRIAL LOOP k = 1; k < L; k++
S14
S15
MULTI-BIT TRANSITION PROCESS
S12
SINGLE-BIT TRANSITION PROCESS
S16
Mflip_flag == 0?
NO
YES
S17
MULTI-BIT TRANSITION TRIAL LOOP
S18
NO
SOLUTION SEARCH END?
YES
OUTPUT SOLUTION SEARCH RESULT
S19
END

FIG. 4

SINGLE-BIT TRANSITION PROCESS
CALCULATE ΔE
S20
ACCEPTANCE DETERMINATION
S21
SELECT STATE VARIABLE TO BE UPDATED
S22
S23
NO
UPDATABLE?
YES
S24
UPDATE PROCESS
RETURN

# FIG. 5

MULTI-BIT TRANSITION PROCESS
STORE STATE AND LOCAL FIELD OF STARTING POINT
S30
n-BIT TRANSITION TRIAL LOOP i = 0; i < n; i++
S31
CALCULATE ΔE
S32
ACCEPTANCE DETERMINATION
S33
DETERMINE TRANSITION CANDIDATE, AND UPDATE STATE
S34
CALCULATE CUMULATIVE VALUE OF ΔE
S35
S36
i==n-1?
NO
YES
ACCEPTANCE DETERMINATION WITH CUMULATIVE VALUE
S37
S38
ACCEPTABLE?
NO
YES
Mflip_flag = 1
S39
Mflip_flag = 0
S41
S40
UPDATE LOCAL FIELD
S42
RETURN STATE AND LOCAL FIELD TO STARTING POINT
S43
UPDATE LOCAL FIELD
n-BIT TRANSITION TRIAL LOOP
S44
RETURN

# FIG. 6

MULTI-BIT TRANSITION PROCESS
STORE STATE AND LOCAL FIELD OF STARTING POINT
S50
n-BIT TRANSITION TRIAL LOOP i = 0; i < n; i++
S51
CALCULATE ΔE
S52
ACCEPTANCE DETERMINATION
S53
DETERMINE TRANSITION CANDIDATE, AND UPDATE STATE
S54
CALCULATE CUMULATIVE VALUE OF ΔE
S55
ACCEPTANCE DETERMINATION WITH CUMULATIVE VALUE
S56
S57
ACCEPTABLE?
NO
YES
S60
i==n-1?
NO
YES
Mflip_flag = 1
S58
Mflip_flag = 0
S61
S59
UPDATE LOCAL FIELD
S62
RETURN STATE AND LOCAL FIELD TO STARTING POINT
S63
UPDATE LOCAL FIELD
S64
Mflip_flag == 0?
NO
YES
n-BIT TRANSITION TRIAL LOOP
S65
RETURN

FIG. 7
FIFO
MEMORY
UPDATE PHASE
READ $W_{ij}$
CALCULATE $W_{ij}\Delta x_j$
READ $h_i$
UPDATE AND WRITE $h_i$
TRIAL PHASE
READ $h_i$
STORE STATE AND $h_i$ AT STARTING POINT
CALCULATE ΔE
ACCEPTANCE DETERMINATION
DETERMINE TRANSITION CANDIDATE
CALCULATE ΔE CUMULATIVE VALUE
ACCEPTANCE DETERMINATION
t1 t2 t3 t4 t5 t6 t7 t8 t9 t10 t11 t12 t13 t14
FIRST-bit TRANSITION PROCESS
SECOND-bit TRANSITION PROCESS
THIRD-bit TRANSITION PROCESS
FIRST-bit TRANSITION PROCESS

FIG. 8
CONTROL CIRCUIT
17
30
12
MEMORY
j
1 · k-1,k · · l-1,l · m-1,m · · N
11
1
2
i
N
a
b
c
d
32
UPDATE CIRCUIT
32a
STATE UPDATE HOLDING CIRCUIT
state
state
state
state
32b
$h_i$
$h_i$
$h_i$
$h_i$
LOCAL FIELD UPDATE HOLDING CIRCUIT
12e
ACCESS CONTROL CIRCUIT
12f
ACCESS CONTROL CIRCUIT
12a
STATE STORAGE REGION
state
state
state
state
12b
STARTING POINT STATE STORAGE REGION
STstate
STstate
STstate
STstate
12c
LOCAL FIELD STORAGE REGION
$h_i$
$h_i$
$h_i$
$h_i$
12d
STARTING POINT LOCAL FIELD STORAGE REGION
$STh_i$
$STh_i$
$STh_i$
$STh_i$
31
TRANSITION CANDIDATE DETERMINATION CIRCUIT
31a1
31a2
31a3
31a4
MODULE
$h_i$
ΔE
ACCEPTANCE
SELECT
31b
SELECTION CIRCUIT (4-1 SELECTOR × 4 LANES)

FIG. 9

index
ΔE
index
ΔE
index
ΔE
index
ΔE
33a1
33a2
33a3
33a4
33
ΣΔE
ΣΔE
ΣΔE
ΣΔE
CUMULATIVE VALUE CALCULATION CIRCUIT
index
index
index
index
33b1
33b2
33b3
33b4
33c
DETERMINATION CIRCUIT
16
19
18
COMPARISON CIRCUIT
ENERGY UPDATE HOLDING CIRCUIT
20
LOWEST ENERGY UPDATE HOLDING CIRCUIT

# FIG. 10

MULTI-BIT TRANSITION PROCESS
STORE STATE AND LOCAL FIELD OF STARTING POINT
S70
n-BIT TRANSITION TRIAL LOOP
i = 0; i < n; i++
S71
CALCULATE ΔE
S72
ACCEPTANCE DETERMINATION
S73
FOR EACH MODULE
DETERMINE TRANSITION CANDIDATE, AND UPDATE STATE
S74
CALCULATE CUMULATIVE VALUE OF ΔE
S75
S76
i==n-1?
NO
YES
ACCEPTANCE DETERMINATION WITH CUMULATIVE VALUE
S77
S78
ACCEPTABLE?
NO
YES
Mflip_flag = 1
S79
Mflip_flag = 0
S82
S80
RETURN STATE AND LOCAL FIELD TO STARTING POINT
S83
RETURN STATE AND LOCAL FIELD TO STARTING POINT
S84
UPDATE LOCAL FIELD
UPDATE STATE AND LOCAL FIELD
S81
n-BIT TRANSITION TRIAL LOOP
S85
RETURN

FIG. 11

MULTI-BIT TRANSITION PROCESS
STORE STATE AND LOCAL FIELD OF STARTING POINT
S90
n-BIT TRANSITION TRIAL LOOP i = 0; i < n; i++
S91
CALCULATE ΔE
S92
ACCEPTANCE DETERMINATION
S93
DETERMINE TRANSITION CANDIDATE, AND UPDATE STATE
S94
CALCULATE CUMULATIVE VALUE OF ΔE
S95
FOR EACH MODULE
ACCEPTANCE DETERMINATION WITH CUMULATIVE VALUE
S96
ACCEPTABLE?
S97
NO
YES
i==n-1?
S101
NO
YES
Mflip_flag = 1
S98
Mflip_flag = 0
S102
RETURN STATE AND LOCAL FIELD TO STARTING POINT
S99
RETURN STATE AND LOCAL FIELD TO STARTING POINT
S103
UPDATE LOCAL FIELD
S104
UPDATE STATE AND LOCAL FIELD
S100
Mflip_flag == 0?
S105
NO
YES
n-BIT TRANSITION TRIAL LOOP
S106
RETURN

FIG. 12
UPDATE PHASE (PER MODULE)
FIFO
READ $W_{ij}$
CALCULATE $W_{ij}\Delta x_j$
READ $h_i$
UPDATE AND WRITE $h_i$
MEMORY
TRIAL PHASE
READ $h_i$
FOR EACH MODULE
STORE STATE AND $h_i$ AT STARTING POINT
CALCULATE ΔE
ACCEPTANCE DETERMINATION
DETERMINE TRANSITION CANDIDATE
CALCULATE ΔE CUMULATIVE VALUE
ACCEPTANCE DETERMINATION
t20 t21 t23 t24 t26 t27 t28 t30 t31 t33 t34 t35 t36
t25 FIRST-bit TRANSITION PROCESS
t29 SECOND-bit TRANSITION PROCESS
t32 THIRD-bit TRANSITION PROCESS
t37
t38 FIRST-bit TRANSITION PROCESS

FIG. 13

40
DATA PROCESSING APPARATUS
41
PROCESSOR
44
GPU
44a
42
RAM
45
INPUT INTERFACE
45a
43
HDD
46
MEDIUM READER
46a
48
ACCELERATOR CARD
48a
FPGA
48b
DRAM
47
COMMUNICATION INTERFACE
47a
NETWORK
BUS

# FIG. 14

50
COMPUTER
41
PROCESSOR
44
GPU
44a
42
RAM
45
INPUT
INTERFACE
45a
43
HDD
46
MEDIUM
READER
46a
47
COMMUNICATION
INTERFACE
47a
NETWORK
BUS

# EUROPEAN SEARCH REPORT

Application Number
EP 23 18 5813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272682 A1 (DOTE AKI [JP] ET AL) 27 August 2020 (2020-08-27)<br>* paragraph [0038] *<br>* paragraph [0083] - paragraph [0131]; figure 3 *<br>----- | 1-14 | INV.<br>G06F7/544<br>G06N3/126<br>G06N5/01 |
| A | US 2020/401738 A1 (TAMURA HIROTAKA [JP]) 24 December 2020 (2020-12-24)<br>* paragraph [0032] - paragraph [0156]; figures 2, 5 *<br>----- | 1-14 | |
| A | US 2020/278385 A1 (MATSUBARA SATOSHI [JP] ET AL) 3 September 2020 (2020-09-03)<br>* paragraph [0033] - paragraph [0107] *<br>----- | 1-14 | |

TECHNICAL FIELDS SEARCHED (IPC)

G06F
G06N

The present search report has been drawn up for all claims

1

| Place of search | Date of completion of the search | Examiner |
|---|---|---|
| Munich | 21 March 2024 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 18 5813

This annex lists the patent family members relating to the patent documents cited in the above-mentioned European search report. The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| US 2020272682 A1 | 27-08-2020 | CN 111611126 A | 01-09-2020 |
| | | EP 3702975 A2 | 02-09-2020 |
| | | JP 7273288 B2 | 15-05-2023 |
| | | JP 2020135727 A | 31-08-2020 |
| | | US 2020272682 A1 | 27-08-2020 |
| US 2020401738 A1 | 24-12-2020 | CN 112101512 A | 18-12-2020 |
| | | EP 3754556 A1 | 23-12-2020 |
| | | JP 7239826 B2 | 15-03-2023 |
| | | JP 2020204929 A | 24-12-2020 |
| | | US 2020401738 A1 | 24-12-2020 |
| US 2020278385 A1 | 03-09-2020 | CN 111639780 A | 08-09-2020 |
| | | EP 3702939 A1 | 02-09-2020 |
| | | JP 7197789 B2 | 28-12-2022 |
| | | JP 2020140631 A | 03-09-2020 |
| | | US 2020278385 A1 | 03-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020021209 A
- JP 2020064536 A
- JP 2021157361 A
- JP 2021165965 A